## Europäisches Patentamt
## European Patent Office
## Office européen des brevets

(19)

(11) Veröffentlichungsnummer: **0 006 526**
**B1**

(12)

# EUROPÄISCHE PATENTSCHRIFT

(45) Veröffentlichungstag der Patentschrift:
**02.06.82**

(51) Int. Cl.³: **C 01 B 7/01**

(21) Anmeldenummer· **79101893.0**

(22) Anmeldetag: **11.06.79**

(54) Verfahren zur Gewinnung eines wasserfreien Chlorwasserstoff enthaltenden Gasgemisches aus Chlor enthaltenden organischen Rückständen.

(30) Priorität: **24.06.78 DE 2827761**

(43) Veröffentlichungstag der Anmeldung:
**09.01.80 Patentblatt 80/1**

(45) Bekanntmachung des Hinweises auf die Patenterteilung:
**02.06.82 Patentblatt 82/22**

(84) Benannte Vertragsstaaten:
**BE DE FR GB IT NL**

(56) Entgegenhaltungen:
**GB-A-1 350 727**
**US-A-4 018 879**
**CHEMICAL ENGINEERING, vol. 79,
Nr. 11, 15. Mai 1972, McGraw-Hill Building
New York USA
C. HULSWITT and J. A. MRAZ
»HCl recovered from Chlorinated
Organic Waste«, Seiten 80—81
CHEMICAL ENGINEERING PROGRESS,
Vol. 69, Nr. 1, Januar 1973,
American Institute of Chemical Engineers
New York USA
J. J. SANTOLERI: »Chlorinated
Hydrocarbon Waste«, Seiten 68—74**

(73) Patentinhaber: **BASF Aktiengesellschaft,
Carl-Bosch-Strasse 38, D-6700 Ludwigshafen (DE)**

(72) Erfinder: **Langens, Jan, Bevrydingslei 58,
B-2080 Kalmthout (BE)**
Erfinder: **Devroe, Guido, Juliailei 28, B-2130 Brasschaat (BE)**

## Verfahren zur Gewinnung eines wasserfreien, Chlorwasserstoff enthaltenden Gasgemisches aus Chlor enthaltenden organischen Rückständen

Gegenstand der Erfindung ist ein Verfahren zur Verbrennung von Chlor enthaltenden organischen Stoffen mit Sauerstoff, wobei weitgehend wasserfreier Chlorwasserstoff erhalten und Verbrennungsenergie gewonnen wird.

Bei der Verbrennung von Chlor enthaltenden organischen Stoffen entsteht neben Kohlendioxid, Kohlenmonoxid und Wasser Chlorwasserstoff. Es sind bereits Verfahren zur Rückgewinnung von Chlor aus Chlor enthaltenden organischen Stoffen bekannt, bei denen die Stoffe verbrannt werden und der Chlorwasserstoff in Form einer wäßrigen Lösung als Salzsäure gewonnen wird. Mitunter wird jedoch für technische Umsetzungen Chlorwasserstoff in wasserfreier Form benötigt. Es besteht daher das Erfordernis, Chlor enthaltende organische Rückstände zu verbrennen, wobei in wirtschaftlicher Arbeitsweise wasserfreier Chlorwasserstoff erhalten wird. In der DE-A-2 261 795 ist bereits ein Verfahren beschrieben, bei dem aus den Chlor enthaltenden organischen Stoffen in einer Salzschmelze in Abwesenheit von Sauerstoff Chlorwasserstoff abgespalten wird, der in weitgehend wasserfreier Form anfällt und somit chemischen Umsetzungen zugeführt werden kann. In einer zweiten Stufe wird dann der chlorfreie organische Stoff mit Sauerstoff zu $CO_2$ und Wasser verbrannt. Das Arbeiten in der Salzschmelze erfordert aufwendige Apparaturen, so daß diese Verfahren noch nicht voll befriedigen.

In einem Artikel in Chemical Engineering, Vol. 79, Nr. 11 (1972), Seiten 80 – 81, ist ein Verfahren zur Gewinnung von Chlorwasserstoff beschrieben, bei dem chlorhaltige organische Rückstände bei Temperaturen von 1650°C oder höher verbrannt werden, die Verbrennungsprodukte auf 150° bis 370°C in einem Graphitreaktor abgekühlt werden und der Chlorwasserstoff in verdünnter Salzsäure absorbiert wird. Die erhaltene, 27%ige Salzsäure kann in Fraktionierkolonnen entwässert werden.

Der Erfindung liegt nun die Aufgabe zugrunde, ein Verfahren zu schaffen, bei dem organische Chlor enthaltende Stoffe in Sauerstoffatmosphäre verbrannt werden, wobei Chlorwasserstoff erhalten wird, der weitgehend frei von Wasser, Kohlenmonoxid und Chlor ist.

Es wurde nun gefunden, daß die Aufgabe gelöst werden kann durch ein Verfahren zum Gewinnen eines wasserfreien, Chlorwasserstoff enthaltenden Gasgemisches aus Chlor enthaltenden organischen Rückständen durch Verbrennen der Rückstände in einer Sauerstoff enthaltenden Atmosphäre und Abtrennen des Chlorwasserstoff enthaltenden Gasgemisches von dem bei der Verbrennung entstehenden Wasser.

Das Verfahren ist dadurch gekennzeichnet, daß man die Verbrennung der Rückstände, die Wasserstoff und Chlor in einem Verhältnis von über 0,028 enthalten sollen, in einer mehr als 80 Vol.-% Sauerstoff enthaltenden Atmosphäre bei Drucken zwischen 1 und 100 bar und Temperaturen von über 2000°C in einer Verbrennungskammer vornimmt, in der die entstehende Wärme so abgeführt wird, daß die ausströmenden Verbrennungsprodukte eine Temperatur zwischen 200 und 800°C aufweisen, und diese Verbrennungsprodukte dann in eine erste Abkühlzone leitet, die eine Lösung von Chlorwasserstoff in Wasser enthält und das Gemisch aus Wasser, Chlorwasserstoff und den anderen Verbrennungsprodukten auf eine Temperatur von 10 bis 80°C abkühlt, das gasförmige Gemisch, das Chlorwasserstoff und Kohlendioxid enthält, aus der ersten Abkühlzone austrägt und in einer zweiten Kühlzone auf Temperaturen von −40 bis 0°C abkühlt und von der kondensierten wäßrigen Salzsäure abtrennt und aus der zweiten Abkühlzone austrägt.

Das Verfahren hat den Vorteil, daß man in technisch einfacher Weise weitgehend wasserfreien Chlorwasserstoff erhält, der außerdem frei von flüchtigen Eisenverbindungen ist, und der lediglich noch mit Kohlendioxid und Spuren von Kohlenmonoxid, Wasserstoff und Chlor vermischt ist. Der Chlorwasserstoff kann in dieser Form chemischen Reaktionen zugeführt werden, bei denen die Anwesenheit von Kohlendioxid nicht stört. Eine solche Reaktion ist beispielsweise die Herstellung von Dichloräthan nach dem Oxichlorierungsverfahren.

Nach dem Verfahren können vor allem flüssige, Chlor, Kohlenstoff, Wasserstoff oder auch Sauerstoff enthaltende organische Verbindungen oder Verbindungsgemische, die Chlor enthalten, verbrannt werden. Solche Stoffe sind z. B. flüssige organische Verbindungen, die als Destillationsrückstände bei der Herstellung von Vinylchlorid anfallen. Das Gewichtsverhältnis von Wasserstoff und Chlor in den Produkten oder Gemischen soll derart sein, daß auf 1 g Wasserstoff höchstens 35,5 g Chlor entfallen. Das Gewichtsverhältnis Wasserstoff zu Chlor soll also über 0,028 liegen. Vorteilhaft liegt das Verhältnis zwischen 0,035 und 0,07.

Die Verbrennung der Chlor enthaltenden Produkte wird mit solchen Mengen Sauerstoff vorgenommen, daß kein Ruß und Chlor entsteht. Ein Überschuß an Sauerstoff würde die Entstehung von freiem Chlor im Verbrennungsgemisch bewirken. Bei Unterschuß von Sauerstoff erfolgt Rußbildung in der Verbrennungszone. Am zweckmäßigsten arbeitet man nach einer Arbeitsweise, die in den Verbrennungsgasen den CO- und $Cl_2$-Gehalt mittels Analysegeräte bestimmt und danach die Sauerstoffmenge steuert. Ist der CO-Gehalt hoch, muß man mehr Sauerstoff zugeben und umgekehrt. Man arbeitet dann mit einem solchen Verhältnis von Sauerstoff zu Chlor enthaltender organischer Verbindung, daß die Bildung von freiem Chlor unter den gegebenen Bedingungen vermieden wird. Die Verbrennung erfolgt in einem Druckbereich zwischen 1 und 100, vorteilhaft zwischen 2 und 30 und insbesondere zwischen 4 und 10 bar.

Die sauerstoffhaltige Atmosphäre kann aus reinem Sauerstoff oder Gemischen aus Sauerstoff und inerten Gasen bestehen. Um möglichst hohe Temperaturen zu erhalten, arbeitet man mit möglichst hohem Sauerstoffgehalt, z. B. über 90 Vol.-%.

Die Verbrennung erfolgt bei Temperaturen von über 2000°C, vorteilhaft über 2200°C und insbesondere in einem Bereich oberhalb 2500°C.

Die Verbrennung erfolgt in einer Verbrennungskammer, die mit Vorrichtung zum Abführen der entstehenden Wärme ausgerüstet ist. So kann die Verbrennungskammer beispielsweise von einem Kühlmantel umgeben sein, der zur Erzeugung von Dampf dient. So kann man z. B. pro Kilogramm Chlor enthaltender Produkte 4 Kilogramm oder mehr Dampf erzeugen. Nach dieser Methode kann mindestens 70% der Verbrennungswärme wiedergewonnen werden. Die Verbrennungskammer kann aus normalem Kohlenstoffstahl hergestellt sein, der mit einem Metall oder einer Metallegierung ausgekleidet ist, die widerstandsfähig gegenüber der Einwirkung von Chlorwasserstoff und Chlor ist.

Dieser Kühlmantel bewirkt ein Abkühlen der Verbrennungsprodukte auf Temperaturen zwischen 200 bis 800°C, vorzugsweise zwischen 500° und 700°C. Enthalten die Rückstände geringe Mengen Eisen, soll die Temperatur der Verbrennungsprodukte über 500°C liegen.

Die auf die angegebenen Temperaturen abgekühlten Verbrennungsprodukte werden nun in eine erste Abkühlzone geleitet, die eine Lösung von Chlorwasserstoff in Wasser enthält. Es ist meist nicht erforderlich, Wasser der Lösung zuzusetzen. Die Lösung besteht aus dem bei der Verbrennung gebildeten Wasser, das mit Chlorwasserstoff gesättigt ist. Die Chlorwasserstoffkonzentration in der Lösung ist abhängig von der herrschenden Temperatur und vom Druck. Bei einem Druck von 2,68 bar und einer Temperatur von 60°C ist die Chlorwasserstoffkonzentration etwa 40 Gew.-%. In dieser ersten Abkühlzone wird das Gemisch aus Wasser, Chlorwasserstoff und den anderen Verbrennungsprodukten auf Temperaturen von 10° bis 80°C, vorteilhaft 40 bis 60°C, abgekühlt.

Die erste Kühlzone ist zweckmäßig in Form eines Umlaufreaktors ausgebildet, in dessen einem Teil eine Kühlvorrichtung angebracht ist. Die in dem Reaktor vorhandene gesättigte Lösung von Chlorwasserstoff wird nach dem Mammutpumpenprinzip durch das Einleiten des Verbrennungsgases im Kreise bewegt. Dabei wird das Verbrennungsgasgemisch gewaschen, so daß geringe Mengen an Metallchloriden und Ruß in der ersten Kühlzone verbleiben. Um das Flüssigkeitsniveau im Umlaufreaktor zu halten, kann man jeweils eine konstante Menge pro Zeiteinheit aus dem Reaktor abziehen. Man kann aber auch die flüssige Phase über einen Überlauf einem Verdampfer zuführen, in dem der Chlorwasserstoff der Lösung ausgetrieben wird, wobei sich die Konzentration auf etwa 20% HCl verringert. Diese Salzsäurelösung wird dann zusammen mit der Verunreinigung aus dem Verdampfer ausgetragen.

Es ist aber auch möglich, die in der ersten Kühlzone eventuell absetzenden geringen Rußmengen zusammen mit einem geringen Anteil an gesättigter Lösung von Chlorwasserstoff auszutragen und dieses Gemisch zusammen mit den Chlor enthaltenden organischen Verbindungen in die Verbrennungszone einzuführen.

Die gasförmigen Bestandteile, die hauptsächlich aus Chlorwasserstoff und Kohlendioxid bestehen, werden dann aus der ersten Kühlzone abgezogen. Das heißt die gasförmigen Bestandteile verlassen die erste Kühlzone am Kopf der Kühlzone. Die Verbrennungsprodukte werden dann in einer zweiten Kühlzone auf Temperaturen von --40° bis 0°C abgekühlt und von der wäßrigen Salzsäure abgetrennt. Nach einer besonders vorteilhaften Ausführungsform führt man die wäßrige Salzsäure aus der zweiten Kühlzone wieder in die erste Abkühlzone zurück. Besonders vorteilhaft arbeitet man in der zweiten Kühlzone bei Temperaturen von −10° bis −20°C.

In der zweiten Kühlzone werden die flüssigen Kondensate am Boden und die gasförmigen Bestandteile am Kopf abgezogen. Die flüssigen Bestandteile können in die erste Kühlzone zurückgeführt werden. Es können auch vorteilhaft zwei Kühler hintereinander geschaltet werden.

Die in den Beispielen genannten Prozente und Teile beziehen sich auf das Gewicht.

Beispiel 1

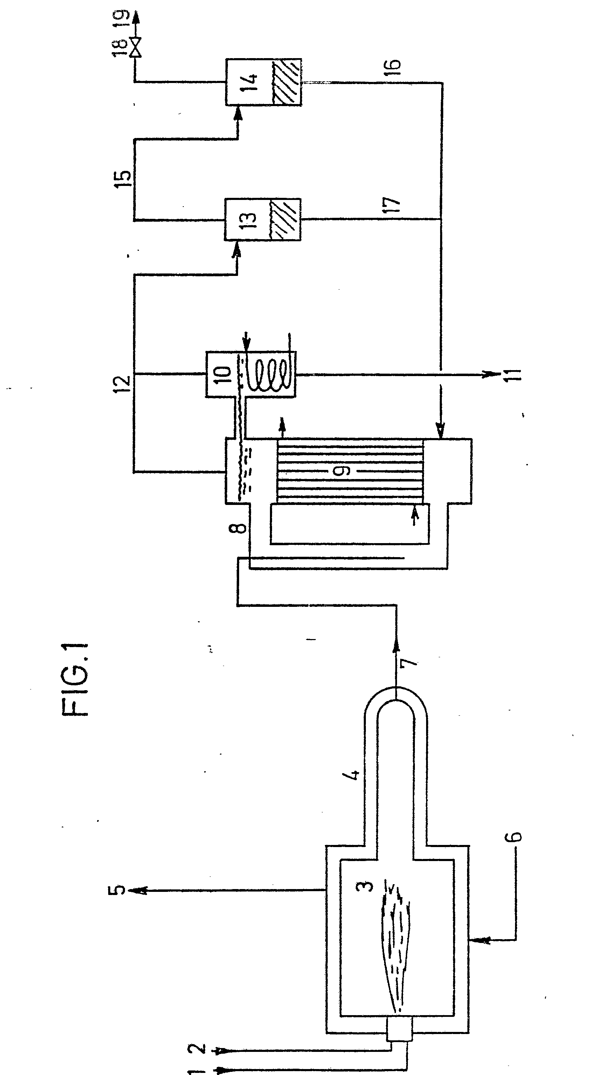

Ein Rückstand, der von der Vinylchloridherstellung stammt und 3,7% Wasserstoff, 32,3% Kohlenstoff und 64% Chlor enthält, wird nach einer Arbeitsweise, wie in der Figur 1 verdeutlicht ist, über Leitung 1 mit einer Menge von 154 kg/h in eine Verbrennungkammer 3 eingeführt. Gleichzeitig wird über Leitung 2 reiner Sauerstoff in einer Menge von 152 kg/h in die Brennkammer 3 eingebracht. Der Verbrennungsrückstand enthält als Verunreinigung außerdem 550 ppm Eisen.

Die Verbrennung verläuft in der Brennkammer 3 bei einem Druck von 7 bar und einer Temperatur von 2500°C. Die Kammer ist von einem Kühlmantel 4 umgeben. Der sich bildende Dampf wird über Leitung 5 abgeführt, durch Leitung 6 wird Frischwasser in den Kühlmantel eingebracht.

Die Verbrennungsprodukte verlassen die Kammer 3 über Leitung 7. Sie haben sich am Ausgang der Kammer 3 auf 650°C abgekühlt. Der Gasstrom enthält pro Stunde 104 kg HCl, 176 kg $CO_2$, 0,1 kg CO, 0,6 kg Sauerstoff, 0,1 kg Wasserstoff und 27 kg Wasser. Der Chlorgehalt liegt unter 10 ppm.

Die Reaktionsgase werden in den Schleifenreaktor 8 (erste Kühlzone) eingebracht, der mit einem Kühler 9 versehen ist. Mit Hilfe der Kühlvorrichtung 9 wird die in dem Reaktor 8 enthaltene 40%ige Salzsäure auf Temperaturen abgekühlt, die am Boden des Reaktors gemessen, zwischen 50 und 60°C liegen. Die über Leitung 7 in den Reaktor 8 eintretenden Gase werden dort auf 60 bis 70°C abgekühlt. Aufgrund der freiwerdenden Wärme wird nach dem Mammutpumpenprinzip der Flüssiginhalt im Reaktor umgewälzt. Der Reaktor ist mittels eines Überlaufes zu dem Verdampfer 10 verbunden. In dem Verdampfer herrscht eine Temperatur von 160°C. Die aus dem Reaktor 8 und dem Verdampfer 10 austretenden gasförmigen Produkte werden über Leitung 12 in den Kühler 13 (zweite Kühlzone) zugeführt und dort auf eine Temperatur von 30°C abgekühlt. Über Leitung 15 gelangen die gasförmigen Produkte in einen zweiten Kühler 14 und werden dort auf $-18°$C abgekühlt. Über Leitung 16 und 17 werden die flüssigen, kondensierten Produkte in den Reaktor 8 zurückgeführt. Über ein Ventil 18 und Leitung 19 werden die gasförmigen Verbrennungsprodukte abgeführt. Die Verbrennungsprodukte enthalten 67% $CO_2$, 32% HCl, 0,18% CO, 0,42% $O_2$, 0,05% $H_2$ und 20 ppm $Cl_2$ sowie 10 ppm Wasser.

Über Leitung 11 werden 34 kg/h an 20%iger Salzsäure, in der das gesamte Eisen in Form von Eisen-III-chlorid gelöst ist, ausgetragen.

Man erhält also Verbrennungsprodukte, die frei von Eisen sind und direkt der Herstellung von Dichloräthan nach dem Oxochlorierungsverfahren zugeführt werden können.

Beispiel 2

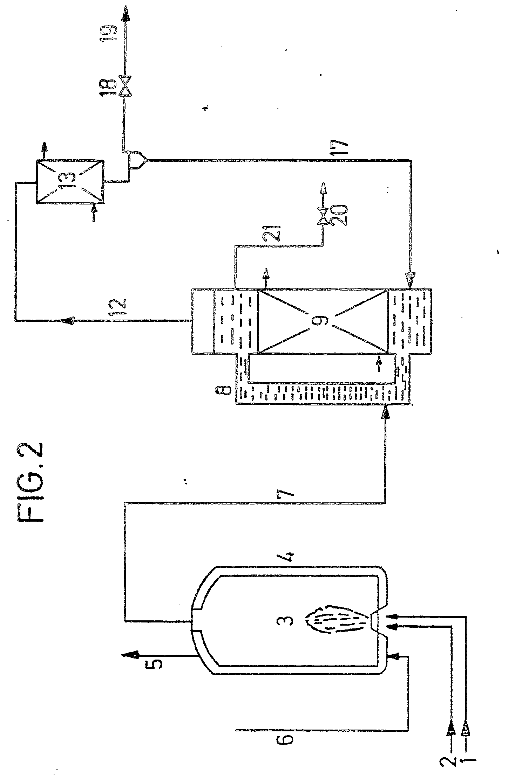

Ein Rückstand, der von der Vinylchlorid-Herstellung stammt und 3,3%, 32,8% Kohlenstoff und 63,9% Chlor (Gew.-%) und 0,15% Eisen enthält, wird nach einer Arbeitsweise, wie sie in Figur 2 dargestellt ist, verbrannt. Durch Leitung 1 werden 167 kg/h des Chlor enthaltenden Rückstandes in die Brennkammer 3 eingebracht. Durch Leitung 2 wird 166 kg/h reiner Sauerstoff in die Brennkammer 3 eingeführt. Das Produkt verbrennt in einer relativ kurzen und stark lumineszierenden Flamme. Der Druck in der Brennkammer 3 beträgt 8,3 bar, die Temperatur über 2500°C. Die Brennkammer 3 ist mit einem Kühlmantel 4 umgeben. Die Verbrennungswärme, die etwa 15 500 kJ (3700 kcal)/kg Verbrennungsrückstand beträgt, wird über den in dem Kühlmantel 4 sich bildenden Dampf abgeführt. Der Dampf verläßt den Kühlmantel 4 über Leitung 5. Durch Leitung 6 wird dem Kühlmantel Frischwasser zugeführt. Die Verbrennungsprodukte verlassen die Brennkammer 3 mit einer Temperatur zwischen 600 und 650°C durch die Leitung 7 und werden in einen Schleifenreaktor 8, der mit einem Kühler 9 versehen ist, eingebracht. Dieser Schleifenreaktor 8, der mit konzentrierter Salzsäure gefüllt ist, bildet die erste Kühlzone. Der Flüssigkeits- und Gasinhalt im Schleifenreaktor 8 wird nach dem Mammutprinzip umgewälzt. Die Temperatur beträgt am Boden des Reaktors 60°C. Der Druck in der Gasphase beträgt 7,5 bar. Der Flüssigkeitsspiegel im Reaktor 8 wird mit Hilfe des Ventils 20 reguliert. Über das Ventil 20 und Leitung 21 werden etwa 30 l/h an etwa 40%iger Salzsäure abgeführt. Die Salzsäure enthält etwa 7 g/l an Eisen in Form von Eisen(III)-chlorid. Die gasförmigen Produkte verlassen den Schleifenreaktor 8 über die Leitung 12 und werden dem Kühler 13, der die zweite Kühlzone bildet, zugeführt. In dem Kühler 13 werden die gasförmigen Produkte auf $-18°$C abgekühlt. Dabei kondensiert Salzsäure in einer Menge von etwa 6 l/h, die über Leitung 17 dem Schleifenreaktor 8 zugeführt werden. Die gasförmigen Produkte, die einen Druck von etwa 7 bar haben, werden über Ventil 18 und Leitung 19 ausgetragen. Die Verbrennungsprodukte enthalten 63,3% $CO_2$, 36,1% HCl, 0,22% $O_2$, 550 ppm CO, $< 100$ ppm $H_2$, $< 10$ ppm $Cl_2$, $\sim 10$ ppm $H_2O$.

Beispiel 3

Nach einer Arbeitsweise, wie sie in Beispiel 2 beschrieben wird, bringt man ein Chlor enthaltendes flüssiges Produkt, das 26,2% Kohlenstoff, 2,85% Wasserstoff und 70,95% Chlor sowie 0,1% Eisen enthält, in die Brennkammer ein. Bei der Verbrennung des Chlor enthaltenden Produktes werden 11 700 kJ (2800 kcal)/kg gewonnen. Es werden etwa 167 kg/h des Chlor enthaltenden Produktes und 128 kg Sauerstoff in die Brennkammer eingebracht. Pro Stunde wird etwa 550 kg Dampf, der einen Druck von 6 bar hat, gewonnen. Die Verbrennungstemperatur liegt zwischen 2200° und 2500°C, der Druck in der Brennkammer beträgt 8,3 bar.

Aus dem Schleifenreaktor wird etwa 15 l/h einer 41%igen Salzsäurelösung, die 11 g/l Lösung an Eisen enthält, abgezogen. Das Produkt, das den Kühler 13 über Ventil 18 und Leitung 19 verläßt, enthält 52% $CO_2$, 45,2% HCl, 0,16 $O_2$, 450 ppm CO, $< 100$ ppm $H_2$, 35 ppm $Cl_2$ und 10 ppm $H_2O$.

**Patentansprüche**

1. Verfahren zum Gewinnen eines wasserfreien, Chlorwasserstoff enthaltenden Gasgemisches aus Chlor enthaltenden organischen Rückständen durch Verbrennen der Rückstände in einer Sauerstoff enthaltenden Atmosphäre und Abtrennen des Chlorwasserstoff enthaltenden Gasgemisches von dem bei der Verbrennung entstehenden Wasser, dadurch gekennzeichnet, daß man die Verbrennung der Rückstände, die Wasserstoff und Chlor in einem Gewichtsverhältnis von über 0,028 enthalten, in einer mehr als 80 Vol.-% Sauerstoff enthaltenden Atmosphäre bei Drucken zwischen 1 und 100 bar und Temperaturen von über 2000°C in einer Verbrennungskammer vornimmt, in der die entstehende Wärme so abgeführt wird, daß die ausströmenden Verbrennungsprodukte eine Temperatur zwischen 200 und 800°C aufweisen, und diese Verbrennungsprodukte dann in eine erste Abkühlzone leitet, die eine Lösung von Chlorwasserstoff in Wasser enthält, und das Gemisch aus Wasser, Chlorwasserstoff und den anderen Verbrennungsprodukten auf Temperaturen von 10 bis 80°C abgekühlt und danach das gasförmige Gemisch, das Chlorwasserstoff und Kohlendioxid enthält, aus der ersten Abkühlzone austrägt und in einer zweiten Kühlzone auf Temperaturen von −40°C bis 0°C abkühlt und von der kondensierten wäßrigen Salzsäure abtrennt und aus der zweiten Abkühlzone austrägt.

2. Verfahren nach Anspruch 1, dadurch gekennzeichnet, daß man die Verbrennung bei Temperaturen von über 2200°C vornimmt.

3. Verfahren nach Anspruch 1, dadurch gekennzeichnet, daß man die Verbrennungsprodukte in der ersten Kühlzone auf 40° bis 60°C und in der zweiten Kühlzone auf −20 bis −10°C abkühlt.

## Claims

1. A process for obtaining an anhydrous, hydrogen chloride-containing gas mixture from chlorine-containing organic residues by combusting these in an oxygen-containing atmosphere and separating the hydrogen chloride-containing gas mixture from the water formed during combustion, characterized in that the combustion of the residues, which contain hydrogen and chlorine in a weight ratio greater than 0.028, is carried out in an atmosphere containing more than 80% by volume of oxygen, at pressures of from 1 to 100 bar and at above 2,000°C in a combustion chamber in which the heat evolved is removed in such a way that the issuing combustion products have a temperature of from 200 to 800°C, and these combustion products are then passed into a first cooling zone which contains a solution of hydrogen chloride in water, and the mixture of water, hydrogen chloride and the other combustion products is cooled to from 10 to 80°C, and then the gaseous mixture which contains hydrogen chloride and carbon dioxide is discharged from the first cooling zone and cooled to from −40°C to 0°C in a second cooling zone, and is separated from the aqueous hydrochloric acid which condenses and is discharged from the second cooling zone.

2. A process as claimed in claim 1, characterized in that the combustion is carried out at above 2,200°C.

3. A process as claimed in claim 1, characterized in that the combustion products are cooled to from 40° to 60°C in the first cooling zone and from −20° to −10°C in the second cooling zone.

## Revendications

1. Procédé pour l'obtention d'un mélange gazeux anhydre contenant du gaz acide chlorhydrique à partir de résidus organiques contenant du chlore, par combustion de ces résidus dans une atmosphère contenant de l'oxygène et séparation du mélange gazeux contenant du gaz acide chlorhydrique d'avec l'eau qui se forme lors de la combustion, caractérisé en ce qu'on procède à la combustion des résidus, qui contiennent de l'hydrogène et du chlore dans un rapport pondéral de plus de 0,028%, dans une atmosphère contenant plus de 80% en volume d'oxygène, sous des pressions comprises entre 1 et 100 bars et à des températures de plus de 2000°C, dans une chambre de combustion dans laquelle la chaleur produite est évacuée de telle sorte que les produits de combustion qui en sortent présentent une température comprise entre 200 et 800°C, puis on envoie ces produits de combustion dans une première zone de refroidissement qui contient une solution de gaz acide chlorhydrique dans l'eau et on refroidit à une température de 10 à 80°C le mélange d'eau, de gaz acide chlorhydrique et des autres produits de la combustion, après quoi on décharge de la première zone de refroidissement le mélange gazeux qui contient du gaz acide chlorhydrique et de l'anhydride carbonique, on le refroidit dans une seconde zone de refroidissement à une température comprise entre −40° et 0°C, on le sépare de l'acide chlorhydrique aqueux produit par condensation et on l'extrait de la seconde zone de refroidissement.

2. Procédé selon la revendication 1, caractérisé en ce qu'on procède à la combustion à une température de plus de 2200°C.

3. Procédé selon la revendication 1, caractérisé en ce qu'on refroidit des produits de combustion à une température de 40° à 60°C dans la première zone de refroidissement et à une température de −20 à −10°C dans la seconde zone de refroidissement.

FIG.1

0 006 526

# FIG.2